# EUROPÄISCHE PATENTSCHRIFT

(11) **EP 1 219 517 B1**
(45) Veröffentlichungstag und Bekanntmachung des Hinweises auf die Patenterteilung: **29.09.2004**
(21) Anmeldenummer: 01127813.2
(22) Anmeldetag: 22.11.2001
(51) Int. Cl.: B60T 13/14, B60T 11/26, B60T 8/00

(54) **Elektrohydraulische Bremsanlage mit Vorratsbehälter und Vorratsbehälter für eine elektrohydraulische Bremsanlage**
Elektrohydraulic brake system including a hydraulic fluid container and fluid container therefor
Système de freinage électrohydraulique avec un récipient de fluide hydraulique et récipient pour cette système

(30) Priorität: 21.12.2000 DE 10064392
(43) Veröffentlichungstag der Anmeldung: 03.07.2002
(73) Patentinhaber: DaimlerChrysler AG, 70567 Stuttgart (DE)
(72) Erfinder: Beck, Erich, 73099 Adelberg (DE); Frentz, Georg, 72622 Nürtingen (DE); Gautsch, Wolfgang, 73257 Köngen (DE); Rempler, Johann, 70794 Filderstadt (DE)

(56) Entgegenhaltungen:
- DE-A- 1 916 450
- DE-A- 19 841 152
- US-A- 5 335 981

## Beschreibung

Die Erfindung betrifft eine elektrohydraulische Bremsanlage (EHB) nach dem Oberbegriff des Anspruchs 1.

Bei elektrohydraulischen Bremsanlagen wird die zur Abbremsung eines Fahrzeuges erforderliche Bremsenergie durch ein elektrisch betätigbares Bremssystem bereitgestellt. Dabei wird ein Fahrerbremswunsch an einem Bremsbedienelement, insbesondere Bremspedal, mit Sensoren erfasst und in Form von elektrischen Signalen einer elektronischen Steuerung zugeführt. Die Steuerung steuert oder regelt in Abhängigkeit von der erfassten Bremspedalstellung mittels elektrisch ansteuerbaren Ventilen die Zu- bzw. Abfuhr von Hydraulikmedium zu bzw. aus den Radbremseinrichtungen entsprechend dem Fahrerbremswunsch. Die Zufuhr von Hydraulikmedium erfolgt über die Ansteuerung von Ventilen, die eine fluidische Verbindung zwischen einem mit Hydraulikfluid gefüllten Druckspeicher und den Radbremseinrichtungen freigeben können. Der Druckspeicher wird mittels einer Hochleistungsförderpumpe, beispielsweise einer Kolbenpumpe, mit dem erforderlichen Hydraulikfluid befüllt, so dass das Hydraulikfluid unter einem vorgebbaren Druck steht. Die Niederdruckseite der Pumpe (Saugseite) ist über eine Saugleitung mit einem zur Versorgung des Hauptbremszylinders dienenden Vorratsbehälter verbunden. Dieser Vorratsbehälter ist am Hauptbremszylinder angeordnet und dient der Pumpe als Quelle zum Befüllen des Druckspeichers mit Hydraulikfluid.

Die elektrohydraulische Bremsanlage weist einen als Notbremskreis bezeichneten Hydraulikkreisabschnitt auf, der eine direkte hydraulische Verbindung vom Hauptbremszylinder zu den Radbremseinrichtungen gestattet, so dass im Notfall - bei Ausfall der elektrischen Energieversorgung - ein Abbremsen des Fahrzeugs anhand des über die Pedalkraft erzeugten Notbremsdruckes im Notbremskreis möglich ist. Über den mit dem Druckspeicher fluidisch verbundenen, weiteren Hydraulikkreisabschnitt, der im folgenden als Betriebsbremskreis bezeichnet sei, ist im Normalbetrieb, bei funktionierender elektrohydraulische Bremsanlage, ein elektrisch ausgelöster Bremsvorgang möglich.

Derartige Bremsanlagen werden auch mit dem Begriff "Brake-by-Wire" gekennzeichnet. Das Anwendungsgebiet solcher Bremsanlagen umfasst im Übrigen auch die Bereiche Antiblockierregelung (ABS), Antriebsschlupfregelung (ASR), elektronische Bremskraftverteilung (EBV) sowie fahrdynamische Regelungen wie z.B. das Elektronische Stabilitätsprogramm (ESP).

Es sind verschiedene elektrohydraulische Bremsanlagen bekannt, wobei einerseits gasende und andererseits nicht-gasende Druckspeicher verwendet werden. Gasende Druckspeicher haben im Gegensatz zu den nicht-gasenden Druckspeichern die Eigenschaft, dass sich in das Hydraulikfluid im Druckspeicher, und dadurch auch im Betriebsbremskreis, Gas bzw. Luft aus der Umgebung mischen kann. Das Hydraulikfluid wird daher mit Gas bzw. Luft durchsetzt. Zur Erzielung einer bestimmten Bremswirkung ist bei mit Gas durchsetztem Hydraulikfluid eine volumenmäßig erhöhte Hydraulikzufuhr aus dem Druckspeicher in den Betriebsbremskreis notwendig - ansonsten kann nicht der gleiche Bremsdruck erreicht werden verglichen mit gasfreiem Hydraulikfluid.

Um im Notfall im Notbremskreis eine ausreichende Notbremswirkung zu erreichen, ist bei Verwendung von einem gasenden Druckspeicher in einer elektrohydraulische Bremsanlage der Notbremskreis fluidisch von dem Betriebsbremskreis getrennt. Beim Einsatz eines nicht-gasenden Speichers ist diese Maßnahme nicht erforderlich.

Bei elektrohydraulischen Bremsanlagen tritt das Problem auf, dass aufgrund der bei einem Fahrzeug vorliegenden räumlichen Gegebenheiten die Pumpe und der Druckspeicher in der Regel räumlich weit beabstandet zum Vorratsbehälter angeordnet werden müssen, wodurch die Saugleitung derart lang ausgeführt werden muss, dass bei tiefen Temperaturen des Hydraulikfluids (insbesodere bei Fahrtbeginn bei tiefen Außentemperaturen) die Förderleistung der Pumpe erheblich abnimmt. Die Ursache für diese Abnahme sind insbesondere eine Zunahme der Viskosität des Hydraulikfluids sowie eine aufgrund der ebenfalls erhöhten Viskosität der Schmierstoffe der Pumpe sinkende Pumpenleistung. Zudem können Schwingungen über die lange Saugleitung in den Fahrgastraum übertragen werden und unerwünschte Geräusche verursachen.

Aus der US 5 335 981 geht eine Bremsanlage mit zwei Vorratsbehälten hervor, wobei der zweite Vorratsbehälter zur Bevorratung der Pumpe an deren Saugseite angeordnet ist.

Der vorliegenden Erfindung liegt die Aufgabe zugrunde, eine elektrohydraulische Bremsanlage der eingangs genannten Art anzugeben, welche eine ausreichende Förderleistung der Pumpe bei tiefen Temperaturen des Hydraulikfluids ermöglicht und auch ohne fluidische Trennung zwischen dem Notbremskreis und dem Betriebsbremskreis auskommt.

Die Aufgabe wird gelöst durch die Merkmale des Patentanspruches 1. Vorteilhafte Weiterbildungen sind Gegenstand der Unteransprüche.

Die Besonderheit der Erfindung liegt darin, den wenigstens zweiten Vorratsbehälter, der mit der Pumpe verbunden ist und zur Bevorratung von der Pumpe zuzuführendem Hydraulikfluid dient, mit dem ersten Vorratsbehälter über eine separate Verbindungsleitung zu verbinden. Dadurch wird erreicht, dass sich keiner der Vorratsbehälter versehentlich entleert, wodurch die Funktionalität der Bremsanlage eingeschränkt würde.

Der an der Pumpe angeordnete zweite Vorratsbehälter kann eine druckregulierende Wirkung (Elastizität) aufweisen. Die Saugpulsation in der Saugleitung wird durch die genannte Elastizität deutlich gedämpft.

Die üblicherweise mit einem großen Wandquerschnitt ausgelegte Saugleitung erfordert ab einer gewissen Länge der Saugleitung eine spezielle Halterung. Diese Halterung kann aufgrund des vorgesehenen zweiten Vorratsbehälters entfallen. Im Falle einer fluidischen Trennung von Notbremskreis und Betriebsbremskreis ist keine lange Verbindung zwischen dem ersten Vorratsbehälter und dem zweiten Vorratsbehälter vorgesehen und die Saugleitung zwischen dem zweiten Vorratsbehälter und der Pumpe kann extrem kurz ausgeführt sein. Bei der elektrohydraulischen Bremsanlage mit fluidischer Verbindung zwischen dem Notbremskreis und dem Betriebsbremskreis (mit nicht-gasendem Druckspeicher) besteht zwar eine fluidische Verbindung zwischen den beiden Vorratsbehältern, jedoch sind an diese Verbindung nicht die hohen Anforderungen hinsichtlich des Volumendurchsatzes und der Belastbarkeit zu stellen, so dass sie verglichen mit einer Saugleitung an der Saugseite der Pumpe weniger aufwendig konstruiert und gehaltert sein kann.

Die spezielle Halterung für die lange Saugleitung überträgt zudem Pumpengeräusche an den Fahrgastraum, was bei der Erfindung ebenfalls vermieden wird.

Bei der Verwendung eines gasenden Druckspeichers im Betriebsbremskreis werden eventuelle Gas-/Luftanteile in der Rücklaufflüssigkeit durch eine Behältertrennwand, beispielsweise in Form eines Siebes, entgast bzw. entschäumt und gereinigt.

Gemäß einer vorteilhaften Ausführungsform ist der zweite Vorratsbehälter unmittelbar an der Hydraulikeinheit und insbesondere unmittelbar räumlich benachbart zur Pumpe angeordnet, was einer extrem kurzen Saugleitung zur Pumpe entspricht und somit ein noch besseres Saugverhalten, insbesondere bei tiefen Umgebungstemperaturen, bewirkt.

Sind die beiden Vorratsbehälter fluidisch verbunden weist der erfindungsgemäß ebenfalls vorgeschlagene zweite Vorratsbehälter als Besonderheit eine in seinem Innenraum beweglich angeordnete und den Innenraum in zwei Teilräume trennende Membran oder Wand auf, wobei der erste der beiden Teilräume mittels einer Belüftung belüftet ist und der zweite der beiden Teilräume das Hydraulikfluid bevorratet. Ist die Pumpe in Ruhe, zieht sich die Membran bzw. Wand in Richtung Belüftung elastisch zusammen, während über die Saugleitung Hydraulikfluid aus dem ersten Vorratsbehälter nachströmt. Ist die Pumpe nun in Betrieb, bewegt sich die Membran bzw. Wand in Richtung bevorratetem Hydraulikfluid und bewirkt somit eine vorteilhafte Verkürzung des Ansaugweges.

Die Erfindung wird nachfolgend anhand von Ausführungsbeispielen in größerem Detail erläutert, aus denen sich weitere Merkmale und Vorteile der Erfindung ergeben, wobei gleiche oder funktional gleiche Merkmale mit identischen Bezugszahlen bezeichnet sind.

Im Einzelnen zeigen:
- Fig. 1: eine Blockdiagrammdarstellung einer elektrohydraulischen Bremsanlage (EHB);
- Fig. 2: eine vereinfachte schematische Darstellung der für die Erfindung relevanten Teile der in Fig. 1 gezeigten elektrohydraulische Bremsanlage;
- Fig. 3a - c: drei Ausführungsbeispiele der erfindungsgemäßen EHB in einer der Fig. 2 entsprechenden Darstellung; und
- Fig. 4: ein bevorzugtes Ausführungsbeispiel des erfindungsgemäßen Vorratsbehälters.

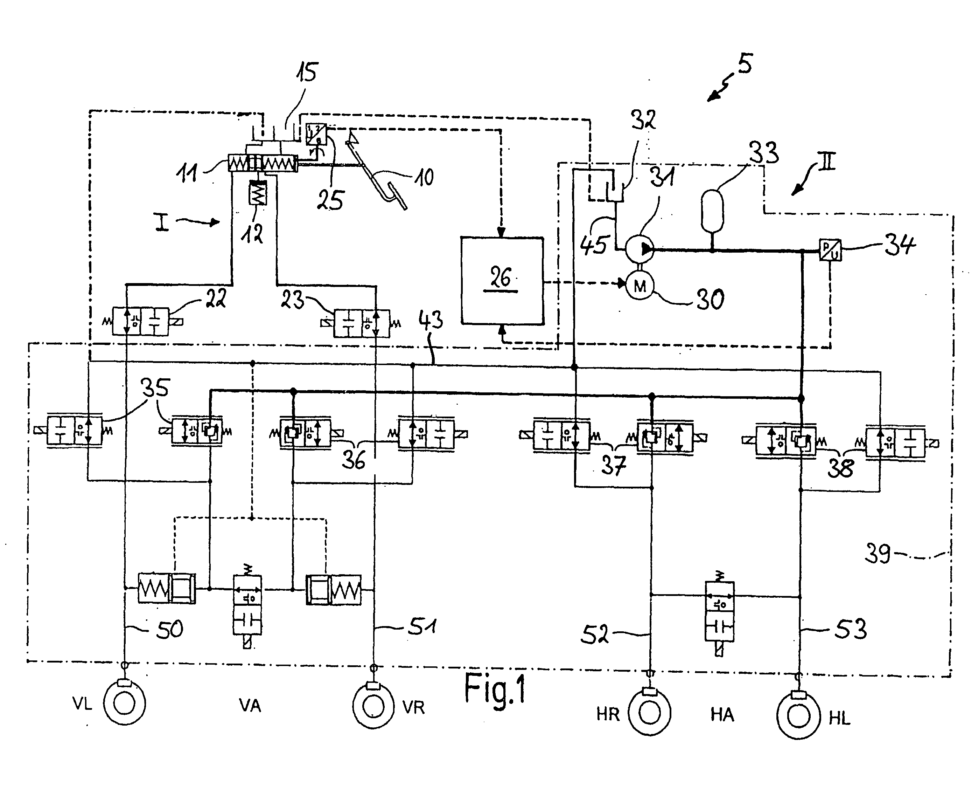

Anhand von Fig. 1 werden die für die Erfindung wesentlichen Merkmale einer elektrohydraulischen Bremsanlage (EHB) 5 erläutert. Über ein Bremspedal 10 kann Druck in einem Hauptbremszylinder 11, der beispielsgemäß als herkömmlicher Tandem-Hauptbremszylinder ausgeführt ist, und in einem Pedalwegsimulator 12 aufgebaut werden. Die beiden Druckkammern des Tandem-Hauptbremszylinders 11 stehen zur Versorgung mit Hydraulikfluid fluidisch in Verbindung mit einem ersten Vorratsbehälter 15.

Die beiden Druckkammern des Tandem-Hauptbremszylinders 11 sind fluidisch mittels Hauptbremszylinderleitungen 20, 21 unter Zwischenschaltung jeweils einer Ventileinrichtung 22 bzw. 23 mit den beiden Radbremseinrichtungen VL, VR der Vorderachse des Fahrzeugs zur Bildung eines Notbremskreises I verbunden. Die Ventileinrichtungen 22 und 23 geben im stromlosen Zustand die Verbindung zwischen den Radbremseinrichtungen VL, VR der Vorderachse des Fahrzeugs und den beiden Druckkammern des Hauptbremszylinders 11 frei, so dass der durch die Pedalkraft erzielte Druck im Hauptbremszylinder 11 die Radbremseinrichtungen VL, VR beaufschlagt.

Die Stellung des Bremspedals 10 wird mittels eines Pedalwegsensors 25 erfasst und an ein Bremssteuergerät 26 weitergeleitet, das z.B. auch von einem Fahrdynamikregel- oder steuergerät gebildet sein kann.

Die elektrohydraulische Bremsanlage 5 verfügt über eine von einem Motor 30 angetriebene Hydraulikpumpe 31, z.B. Kolbenpumpe, die bei der erfindungsgemäßen Ausgestaltung der elektrohydraulische Bremsanlage 5 von einem weiteren, zweiten Vorratsbehälter 32 auf der Niederdruckseite (Saugseite) mit Hydraulikfluid versorgt wird. Die Hydraulikpumpe befüllt einen Druckspeicher 33, so dass in dem Druckspeicher 33 ausreichend Hydraulikmedium unter hohem Druck vorhanden ist. Der Druck im Druckspeicher wird anhand eines Drucksensors 34 gemessen und an das Bremssteuergerät 26 weitergeleitet. Ist der Druck im Druckspeicher zu gering, wird der die Pumpe 31 antreibende Motor 30 mittels des Bremssteuergeräts 26 eingeschaltet, um den Druck wieder auf den gewünschten Wert einzustellen. Bei Erreichen des gewünschten Drucks schaltet das Bremssteuergerät 26 den Motor 30 ab.

Der Druckspeicher 33 ist über jeweils eine Ventileinrichtung 35, 36, 37, 38 mit den Radbremseinrichtungen VL, VR, HL, HR des Fahrzeugs verbunden, wobei die Fluidleitungen zwischen den Ventileinrichtungen 35, 36, 37, 38 und der jeweils zugeordneten Radbremseinrichtung VL, VR, HL, HR als Radbremsleitungen 50, 51, 52, 53 bezeichnet seien. In Abhängigkeit von der detektierten Pedalstellung des Bremspedals 10 steuert das Bremssteuergerät 26 die Ventileinrichtungen 35, 36, 37, 38 an, so dass jeder der Radbremseinrichtungen VL, VR, HL, HR separat zu deren Bremsbeaufschlagung unter Druck stehendes Hydraulikfluid zuführbar ist.

Der zweite Vorratbehälter 32, der Motor 30, die Pumpe 31, der Druckspeicher 33, die elektrisch ansteuerbaren Ventileinrichtungen 35, 36, 37, 38 und die Radbremseinrichtungen VL, VR, HL, HR sind fluidisch miteinander zu einem Betriebsbremskreis II verbunden, wobei der zweite Vorratsbehälter, der Motor 30, die Pumpe 31, der Druckspeicher 33 und die Ventileinrichtungen 35, 36, 37, 38 eine Hydraulikeinheit 39 darstellen (wie in Fig. 1 strichpunktiert dargestellt).

Beispielsgemäß sind der Notbremskreis I und der Betriebsbremskreis II fluidisch voneinander getrennt, da es sich bei dem verwendeten Druckspeicher 33 um einen gasenden Speicher handelt. Die genaue Realisierung der fluidischen Trennung der beiden Bremskreise I, II ist für die Erläuterung der Erfindung nicht notwendig und daher in Fig. 1 auch nicht dargestellt. Der Fachmann kann sich dafür in der Hydraulik bekannter Maßnahmen und Trenneinrichtungen bedienen.

Die beiden Vorratsbehälter 15, 32 sind beim bevorzugten Ausführungsbeispiel fluidisch voneinander getrennt, da der Notbremskreis I und der Betriebsbremskeis II fluidisch getrennt ausgebildet sind. Sie können in Abwandlung hierzu mittels einer Verbindungsleitung 40 fluidisch miteinander verbunden sein, wenn anstatt des gasenden Druckspeichers 33 ein nicht-gasender Druckspeicher verwendet wird.

Gemäß Fig. 1 führt zur Verringerung des Bremsdruckes in den Radbremseinrichtungen VL, VR, HL, HR von den zugeordneten Ventileinrichtungen 35, 36, 37, 38 eine Rückförderleitung 43 zum zweiten Vorratbehälter 32 zurück. Gegebenenfalls kann in die Rückförderleitung 43 eine Rückförderpumpe eingesetzt werden, wenn dies für die Druckabbaudynamik notwendig sein sollte (z.B. für die Antriebsschlupfregelung).

In Abwandlung hierzu kann die Rückförderleitung 43 alternativ oder zusätzlich mit dem ersten Vorratsbehälter 15 verbunden sein, wie dies in Fig. 1 strichpunktiert angedeutet ist. Diese Ausführung ist dann möglich, wenn der Notbremskreis I und der Betriebsbremskreis II fluidisch miteinander verbunden sind (Einsatz eines nicht-gasenden Druckspeichers 33).

Hier ist anzumerken, dass bei elektrohydraulischen Bremsanlagen ohne fluidische Trennung des Notbremskreises I vom Betriebsbremskreis II, die beiden Vorratsbehälter 15, 32 verbunden sind. Der Notbremskreis I kann alternativ zur dargestellten Ausführungsform auch auf sämtliche Radbremseinrichtungen VL, VR, HL und HR wirken.

Fig. 1 zeigt lediglich eine schematische Anordnung der wichtigsten Komponenten einer elektrohydraulischen Bremsanlage 5. Es versteht sich, dass in Abwandlung zu dem in Fig. 1 gezeigten Ausführungsbeispiel weitere elektrische und hydraulische Komponenten für zusätzliche Funktionen vorgesehen sein können, wie z.B. Ventile und Steuergeräte zur Antiblockier- und/oder Antriebsschlupf- und/oder Fahrdynamikregelung (beispielsweise mittels ESP) der Räder. Derartige Bremsanlagen sind hinlänglich bekannt. Zur Erfassung der Raddrehzahl kann zur Realisierung dieser Funktionen an jedem Rad ein Raddrehzahlsensor vorgesehen werden.

Weiterhin ist es möglich den Bremsdruck in den Radbremseinrichtungen VL, VR, HL, HR zu messen und diesen Bremsdruckwert zur Regelung des Bremsdruckes an das Bremssteuergerät weiterzuleiten.

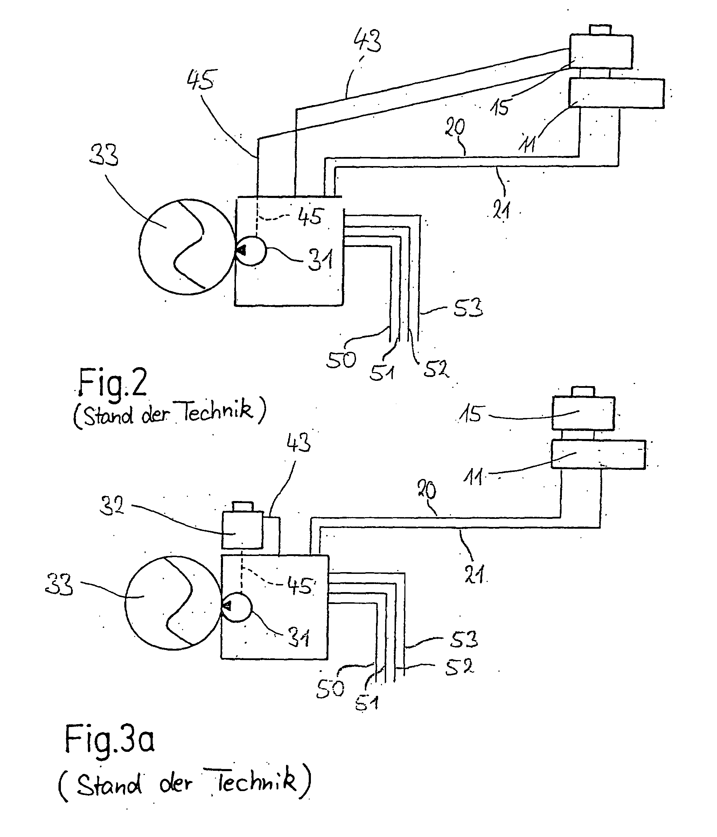

Fig. 2 zeigt sehr schematisiert die Anordnung der wichtigsten Komponenten aus in Fig. 1, wie sie bisher aus dem Stand der Technik bekannt ist. Gezeigt ist hier der Hauptbremszylinder 11 mit dem ersten Vorratsbehälter 15, welche über in der Fig. 1 ebenfalls bezeichnete Hauptbremszylinderleitungen 20, 21 mit der Hydraulikeinheit 39 verbunden sind. Die Hydraulikeinheit 39 umfasst dabei die in Fig. 1 gestrichelt umrahmten Komponenten, wobei hier lediglich die Pumpe 31 und der Druckspeicher 33 dargestellt sind. Die Pumpe 31 ist insbesondere über eine Saugleitung 45 mit dem ersten Vorratsbehälter 15 verbunden. Ferner ist die Hydraulikeinheit 39 über Radbremsleitungen 50, 51, 52, 53 mit den Radbremszylindern VL, VR, HL, HR verbunden.

Die Pumpe 31 saugt demnach bei der Ausführungsform nach Fig. 2 (Stand der Technik) aus dem ersten Vorratsbehälter 15, der auch die Vorderachsbremsen VL und VR in der Rückfallebene versorgt. Ist die Saugleitung 45 sehr lang ausgebildet, wird daher das Saugen der Pumpe 31 bei tiefen Temperaturen stark behindert. Zudem schallen die Pumpengeräusche über die Saugleitung mittels Körperschall- oder Luftschallübertragung in die (hier nicht gezeigte) Fahrgastzelle ein.

In Fig. 3a ist ein, insbesondere für Systeme mit fluidischer Trennung des Notbremskreises I vom Betriebsbremskreis II ausgelegtes Ausführungsbeispiel der elektrohydraulische Bremsanlage 5 gezeigt. Insbesondere ist ein zweiter, als Tandem-Behälter ausgebildeter Vorratsbehälter 32 unmittelbar an der Hydraulikeinheit 39 bzw. an der Hydraulikpumpe 31 angeordnet und ermöglicht eine extrem kurze Saugleitung 45 zur Pumpe 31, was ein verbessertes Saugverhalten, insbesondere bei tiefen Temperaturen, bewirkt. Dies hat zudem den Vorteil, dass wegen der kurzen Saugleitung 45 auch das Einkoppeln von Pumpengeräuschen in den Fahrgastraum des Fahrzeugs vermieden werden kann. Die Rückförderleitung 43 ist mit dem zweiten Vorratsbehälter 32 verbunden, damit der Volumenhaushalt insgesamt stimmt.

Der Volumenverlust aufgrund von Bremsbelagverschleiß im Bereich des Notbremskreises I (Rückfallebene) der Vorderachse mit den Radbremseinrichtungen VL, VR wird hier weiterhin aus dem ersten Vorratsbehälter 15 gespeist. Jedoch wird der Betriebsbremskreis II einschließlich dem Volumenverlust durch Bremsbelagverschleiß an der Hinterachse mit den Radbremseinrichtungen HL, HR aus dem zweiten Vorratsbehälter 32 gespeist. Daher bevorratet jeder der beiden Vorratsbehälter 15, 32 für jeweils eine Achse das Verschleißvolumen. Ein Volumenübergang von einem Bereich in den anderen, der zu Entleeren des einen Vorratsbehälters und zu Überfüllen des anderen Vorratsbehälters führen würde, wird hier durch die fluidische Trennung des Notbremskreises I vom Betriebsbremskreis II vermieden. Der zweite Vorratsbehälter 32 ist in dem vorliegenden Ausführungsbeispiel ein herkömmlicher, für Bremsanlagen üblicherweise verwendeter Behälter mit einem oder mehreren Gasabscheidesieben.

Der zweite Vorratsbehälter 32 ist beispielsgemäß zur Atmosphäre hin offen.

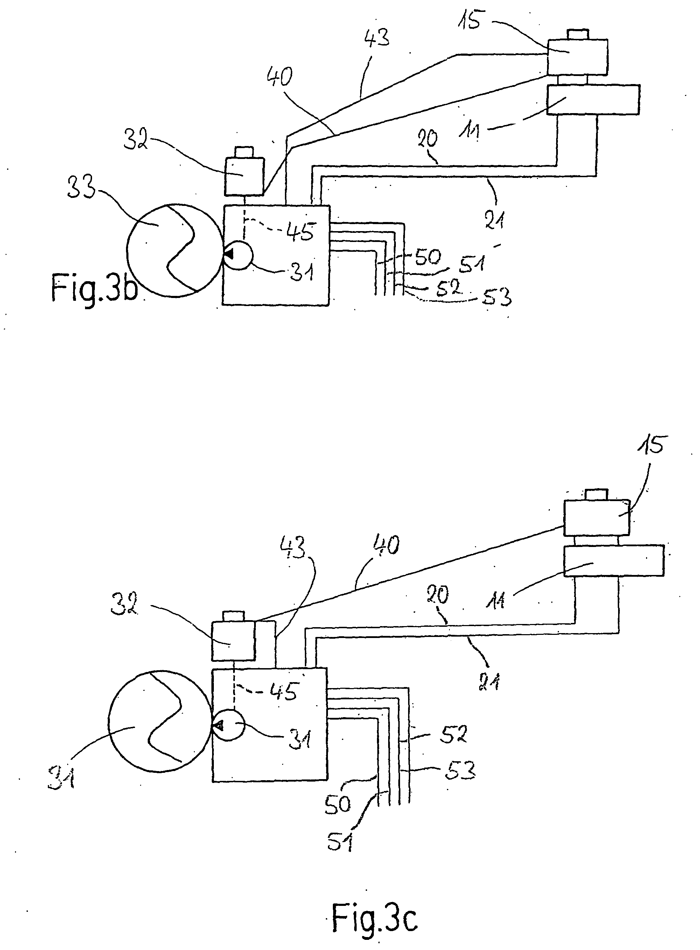

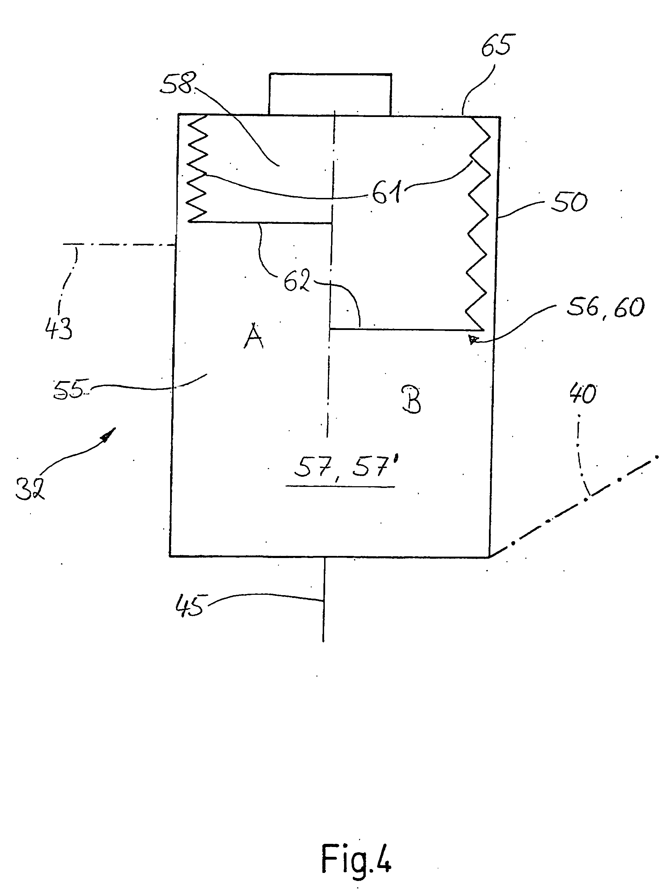

Im Gegensatz zu Fig. 3a, weisen die in den Figuren 3b und 3c gezeigten Ausführungsbeispiele einen insbesondere für elektrohydraulische Bremsanlagen ohne fluidische Trennung des Notbremskreises I vom Betriebsbremskreis II geeigneten und nachfolgend anhand von Fig. 4 detailliert beschriebenen als Tandem-Behälter ausgebildeten, zweiten Vorratsbehälter 32 mit einer druckelastischen Membran auf. Zudem ist der zweite Vorratsbehälter 32 über eine Verbindungsleitung 40 mit dem ersten Vorratsbehälter 15 verbunden. Die Rückförderleitung 43 ist in dem Ausführungsbeispiel gemäß Fig. 3b zum ersten Vorratsbehälter 15 geführt, kann bei optimierter Saugleitung 45 allerdings auch zum zweiten Vorratsbehälter 32 geführt sein (siehe Fig. 3c).

Die Rückförderleitung 43 ist bei der in Fig. 3b gezeigten Ausführung an den am Hauptbremszylinder 11 angeordneten ersten Vorratsbehälter 15 geführt, damit eventuell vorhandene Luft sich dort abscheiden kann und nicht in den zweiten Vorratsbehälter 32 gelangen kann.

Bei günstiger Verlegung der Verbindungsleitung 40 ist auch eine Lösung gemäß Fig. 3c denkbar, wobei die Rückförderleitung 43 zum zweiten Vorratsbehälter 32 führt, dieser jedoch über die oben genannte Verbindungsleitung 40 zum ersten Vorratsbehälter 15 entgasen kann.

Die Fig. 4 zeigt einen, als Tandem-Behälter ausgebildeten zweiten Vorratsbehälter 32, der über eine Verbindungsleitung 40 mit dem ersten Vorratsbehälter 15 fluidisch verbunden ist. Er weist einen Außenbehälter 50 auf, der beispielsgemäß hohlzylinderartig gestaltet ist. An seinen beiden axialen Endbereichen ist der Außenbehälter fluiddicht verschlossen.

Der vom Außenbehälter 50 umgebene Innenraum 55 ist mittels eines verlagerbaren Trennteiles 56 in zwei Teilräume 57 und 58 fluiddicht und insbesondere gasdicht unterteilt. Das Trennteil 56 ist derart verlagerbar, dass es das Volumenverhältnis der beiden Teilräume 57, 58 zueinander durch die Verlagerung verändert.

Beim bevorzugten Ausführungsbeispiel nach Fig. 4 ist das Trennteil 56 von einer druckelastischen Membran 60 gebildet. In Fig. 4 sind zwei Stellungen A, B der Membran 60 dargestellt.

Die Membran 60 weist beispielsgemäß einen axial zusammen bzw. auseinanderfaltbaren zylinderförmigen Faltenbalg 61 auf, der im Bereich seines einen axialen Endes mittels eines plattenähnlichen Abschlussteils 62 gasdicht abgeschlossen ist. Der dem Abschlussteil 62 entgegengesetzte Endbereich des Faltenbalgs 61 ist gasdicht im Innenraum 55 an einem axialen Endbereich des an einem Wandabschnitt 65 des Außenbehälters 50 des zweiten Vorratsbehälters 32 angebracht, so dass der Faltenbalg 61 in seinem Inneren zusammen mit dem Abschlussteil 62 und dem Wandabschnitt 65 des Außenbehälters 50 den einen Teilraum 58 begrenzt, der beispielsgemäß zur Umgebung hin belüftet ist.

Der Faltenbalg 61 ist nach Fig. 4 im wesentlichen koaxial zum Außenbehälter 50 angeordnet. Die Relativanordnung von der das Trennteil 56 bildenden Membran 60 und dem Außenbehälter 50 ist grundsätzlich beliebig wählbar. Auch die Ausführung, Form und Kontur von Trennteil 56 und Außenbehälter 50 sind variabel und nicht auf die dargestellte Form beschränkt. Das Trennteil 56 kann z.B. alternativ auch eine federbeaufschlagte, beweglich geführte Wand oder dergleichen aufweisen.

Der durch die Membran 60 vom Teilraum 58 fluiddicht und insbesondere gasdicht bzw. vakuumdicht abgetrennte Teilraum 57 des Innenraums 55 dient als Vorratsraum 57' für das Hydraulikfluid. In diesen Teilraum 57 mündet die zur Hydraulikpumpe führende Saugleitung 45 sowie die Verbindungsleitung 40 ein und in Abhängigkeit von der Ausführungsform gegebenenfalls die Rückförderleitung 43.

Wenn aus dem Vorratsraum 57' kein Hydraulikfluid abgeführt wird und daher im Vorratsraum 57' kein Unterdruck gegenüber dem anderen Teilraum 58 des Vorratsbehälters 32 erzeugt wird, befindet sich das Trennteil 56 im Ruhezustand (Stellung A in Fig. 4). Beispielsgemäß ist das Abschlussteil 62 aufgrund der Eigenelastizität des Faltenbalgs 61 im Ruhezustand (Stellung A) nahe an dem Wandabschnitt 65 des Außenbehälters angeordnet. Der vom Faltenbalg 61 umgebene Teilraum 58 weist dabei ein kleines Volumen auf, das beim Ausführungsbeispiel wesentlich kleiner ist als das Volumen des Vorratsraumes 57'.

Saugt die Pumpe 31 Hydraulikfluid aus dem Vorratsraum 57' an, dehnt sich der Faltenbalg 61 aus und das Abschlussteil 62 der Membran 60 bewegt sich von dem Wandabschnitt 65 des Außenbehälters 50 weg, wie dies in Fig. 4 in Stellung B dargestellt ist. Dadurch wird das Volumen des Vorratsraumes 57' kleiner. Ein kurzer Ansaugweg ist möglich.

Wird die Pumpe 31 abgeschaltet, zieht sich der Faltenbalg 61 der Membran 60 aufgrund seiner Eigenelastizität wieder zusammen, wobei sich das Abschlussteil 62 der Membran 60 wieder auf den Wandabschnitt 65 zu bewegt bis es seine Ruhelage einnimmt (Stellung A in Fig. 4). Da die beiden Vorratsbehälter 15, 32 beispielsgemäß miteinander verbunden sind, läuft über die Verbindungsleitung 40 Hydraulikfluid aus dem ersten Vorratsbehälter 15 in den Teilraum 57 des zweiten Vorratsbehälters nach. Die Membran saugt quasi so lange Hydraulikfluid über die Verbindungsleitung 40 nach, bis der im Teilraum 57 durch das Abpumpen mittels der Hydraulikpumpe 31 hervorgerufene Unterdruck gegenüber dem mit der Umgebung verbundenen Teilraum 58 wieder ausgeglichen ist.

Die Membran 60 wirkt somit auch als Dämpfer auf die Pumpensaugpulsation und verringert so Saugdruckschwankungen in der Verbindungsleitung 40 und damit auch die Geräuschübertragung in den Fahrgastraum.

Auch wenn bei einem extremen Volumenverbrauch der Bremsflüssigkeit, und ggf. bei tiefen Temperaturen, der Faltenbalg 61 der Membran 60 sehr stark auseinandergezogen ist, wirkt die Dämpfung noch und bewirkt dennoch eine wie oben beschriebene Verbesserung der Ansaugbedingungen.

Die elastische Membran 60 sorgt mithin für eine verbesserte Saugfähigkeit der Pumpe 31 bei tiefen Temperaturen und auch die in der Saugleitung 45 auftretende Saugpulsation wird durch die druckregulierende elastische Membran 60 deutlich gedämpft, was ebenfalls die Geräuschentwicklung absenkt und die ansaugseitige Gasausscheidung minimiert.

Die Befüllung der Vorratsbehälter 15, 32 im Rahmen einer Erstmontage kann im Falle von über eine Verbindungsleitung 40 verbundenen Vorratsbehältern 15, 32 mittels eines einzigen (hier nicht gezeigten) Füllkopfes erfolgen. Bei nicht fluidisch verbundenen Vorratsbehältern 15, 32 werden dementsprechend zwei getrennte Füllköpfe benötigt.

## Patentansprüche

1. Elektrohydraulische Bremsanlage insbesondere eines Fahrzeuges mit einem ersten Vorratsbehälter (15) zur Bevorratung von einem Hauptbremszylinder (11) zuzuführendem Hydraulikfluid, mit einer Hydraulikeinheit (39), die mit dem Hauptbremszylinder (11) und mit mindestens einem Radbremszylinder (VL, VR, HL, HR) druckleitend verbunden ist und die mindestens eine Pumpe (31) aufweist, wobei mindestens ein, mit der Pumpe (31) verbundener zweiter Vorratsbehälter (32) zur Bevorratung von der Pumpe (31) zuzuführendem Hydraulikfluid vorgesehen ist, **dadurch gekennzeichnet, dass** der erste Vorratsbehälter (15) mit dem mindestens zweiten Vorratsbehälter (32) über eine separate Verbindungsleitung (270) verbunden ist.

2. Bremsanlage nach Anspruch 1, **dadurch gekennzeichnet, dass** die Rückförderung von Hydraulikfluid aus dem mindestens einen Radbremszylinder (VL, VR, HL, HR) mittels einer Rückförderleitung (43) in den zweiten Vorratsbehälter (32) erfolgt.

3. Bremsanlage nach Anspruch 1, **dadurch gekennzeichnet, dass** die Rückförderung von Hydraulikfluid aus dem mindestens einen Radbremszylinder (VL, VR, HL, HR) mittels einer Rückförderleitung (43) in den ersten und/oder zweiten Vorratsbehälter (32) erfolgt.

4. Bremsanlage nach Anspruch 1 oder 2 eines wenigstens zweiachsigen Fahrzeuges, **dadurch gekennzeichnet, dass** das durch Verschleiß insbesondere an den Radbremszylindern (VL, VR, HL, HR) beim Bremsbetrieb erforderliche Zusatzvolumen von Hydraulikfluid den Radbremszylindern der einen Achse (VL, VR) aus dem einen Vorratsbehälter (15) und den Radbremszylindern der anderen Achse (HL, HR) aus dem jeweils anderen Vorratsbehälter (32) zugeführt wird.

5. Bremsanlage nach Anspruch 4, **dadurch gekennzeichnet, dass** das Zusatzvolumen für die Radbremszylinder der Vorderachse (VL, VR) aus dem ersten Vorratsbehälter (15) und die Radbremszylinder der Hinterachse (HL, HR) aus dem zweiten Vorratsbehälter (32) zugeführt wird.

6. Bremsanlage nach einem der vorhergehenden Ansprüche, **dadurch gekennzeichnet, dass** der zweite Vorratsbehälter (32) nahe an der Pumpe (31) der Hydraulikeinheit (39) angeordnet ist.

7. Bremsanlage nach einem der vorhergehenden Ansprüche, **dadurch gekennzeichnet, dass** der zweite Vorratsbehälter (32) Mittel (56, 60) zur Druckregulierung aufweist.

## Claims

1. An electrohydraulic braking system in particular of a vehicle with a first reservoir (15) for storing a hydraulic fluid to be supplied by a main brake cylinder (11), a hydraulic unit (39) which is connected to the main brake cylinder (11) and to at least one wheel brake cylinder (VL, VR, HL, HR) in a pressure conducting connection and which has at least one pump (13), at least one second reservoir (32) connected to the pump (31) being provided to store hydraulic fluid to be supplied to the pump (31),
**characterised in that**
the first reservoir (15) is connected to the at least second (32) reservoir via a separate connecting line (270).

2. A braking system in accordance with claim 1,
**characterised in that**
hydraulic fluid is returned from the at least one wheel brake cylinder (VL, VR, HL, HR) to the second reservoir (32) by means of a return line (43).

3. A braking system in accordance with claim 1,
**characterised in that**
hydraulic fluid is returned from the at least one wheel brake cylinder (VL, VR, HL, HR) to the first and/or second reservoir (32) by means of a return line (43).

4. A braking system in accordance with claim 1 or 2 of an at least two-axled vehicle,
**characterised in that**
the additional volume of hydraulic fluid required during braking operation due to wear and tear in particular at the brake cylinders (VL, VR, HL, HR) is fed to the wheel brake cylinders on one axle (VL, VR) from one reservoir (15) and to the wheel brake cylinders on the other axle from the other reservoir (32).

5. A braking system in accordance with claim 4,
**characterised in that**
the additional volume for the wheel brake cylinders on the front axle (VL, VR) is supplied from the first reservoir (15) while that for the wheel brake cylinders on the rear axle (HL, HR) is supplied from the second reservoir (32).

6. A braking system in accordance with one of the preceding claims,
**characterised in that**
the second reservoir (32) is positioned close to the pump (31) of the hydraulic unit (39).

7. A braking system in accordance with one of the preceding claims,
**characterised in that**
the second reservoir (32) has means (56, 60) of pressure regulation,

## Revendications

1. Système de freinage électrohydraulique, plus particulièrement d'un véhicule, avec un premier réservoir (15) pour l'approvisionnement en fluide hydraulique par un maître-cylindre de frein (11), avec une unité hydraulique (39), qui est reliée par une conduite d'alimentation au maître-cylindre de frein (11) et au moins à un cylindre de frein (VL, VR, HL, HR) et qui comporte au moins une pompe (31), moyennant quoi au moins un second réservoir (32) relié à la pompe (31) est prévu pour l'alimentation en fluide hydraulique par la pompe (31), **caractérisé en ce que** le premier réservoir (15) est relié au moins au second réservoir (32) via une conduite de raccordement (270).

2. Système de freinage selon la revendication 1, **caractérisé en ce que** le retour automatique du fluide hydraulique a lieu à partir d'au moins un des cylindres de frein (VL, VR, HL, HR) au moyen d'une conduite de retour de l'huile de balayage (43) dans le second réservoir (32).

3. Système de freinage selon la revendication 1, **caractérisé en ce que** le retour automatique du fluide hydraulique a lieu à partir d'au moins un des cylindres de frein (VL, VR, HL, HR) au moyen d'une conduite de retour de l'huile de balayage (43) dans le premier et/ou dans le second réservoir (32).

4. Système de freinage selon la revendication 1 ou 2 d'un véhicule au moins à deux axes, **caractérisé en ce que**, par l'usure par frottement, plus particulièrement au niveau des cylindres de frein (VL, VR, HL, HR) pour le mécanisme de freinage, le volume supplémentaire nécessaire du fluide hydraulique des cylindres de frein d'un des axes (VL, VR) est amené d'un réservoir (15) et celui des cylindres de l'autre axe (HL, HR) est amené respectivement à partir de l'autre réservoir (32).

5. Système de freinage selon la revendication 4, **caractérisé en ce que** le volume supplémentaire pour le cylindre de frein de l'axe avant (VL, VR) est amené à partir du premier réservoir (15) et le cylindre de frein de l'axe arrière (HL, HR) à partir du second réservoir (32).

6. Système de freinage selon l'une quelconque des revendications précédentes, **caractérisé en ce que** le second réservoir (32) est placé près de la pompe (31) de l'unité hydraulique (39).

7. Système de freinage selon l'une quelconque des revendications précédentes, **caractérisé** en ce cue le second réservoir (32) comporte un moyen (56, 60) pour réguler la pression.
